(19) Europäisches Patentamt
European Patent Office
Office européen des brevets

(11) **EP 3 286 069 B1**

(12) **FASCICULE DE BREVET EUROPEEN**

(45) Date de publication et mention de la délivrance du brevet:
**25.09.2019 Bulletin 2019/39**

(21) Numéro de dépôt: **16717317.8**

(22) Date de dépôt: **12.04.2016**

(51) Int Cl.:
**B63B 1/04** *(2006.01)*     **B63B 35/44** *(2006.01)*

(86) Numéro de dépôt international:
**PCT/EP2016/058003**

(87) Numéro de publication internationale:
**WO 2016/169811 (27.10.2016 Gazette 2016/43)**

(54) **SUPPORT FLOTTANT AVEC SECTION HORIZONTALE VARIABLE AVEC LA PROFONDEUR**

SCHWIMMENDE ANORDNUNG MIT EINEM TIEFENVARIABLEN HORIZONTALEN QUERSCHNITT

FLOATING MOUNTING HAVING A DEPTH-VARIABLE HORIZONTAL CROSS-SECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2015 FR 1553611**

(43) Date de publication de la demande:
**28.02.2018 Bulletin 2018/09**

(73) Titulaire: **IFP Energies nouvelles**
**92500 Rueil-Malmaison (FR)**

(72) Inventeurs:
• **PERDRIZET, Timothee**
  **69007 Lyon (FR)**
• **BOZONNET, Pauline**
  **75001 Paris (FR)**
• **GILBERT, Philippe**
  **75011 Paris (FR)**
• **MABILE, Claude**
  **92140 Clamart (FR)**
• **PAPON, Gerard**
  **78690 Les Essarts Le Roi (FR)**
• **POIRETTE, Yann**
  **38121 Reventin-Vaugris (FR)**
• **POURTIER, Alice**
  **78440 Fontenay St Père (FR)**
• **SAEEDI, Navid**
  **94140 Alfortville (FR)**
• **DUPIN, Victor**
  **75017 Paris (FR)**
• **BANCEL, Thierry**
  **43330 Pont Salomon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-02/28704     GB-A- 2 292 348**
**GB-A- 2 481 321**

EP 3 286 069 B1

**Description**

La présente invention concerne le domaine des supports flottants amarrés en mer (« offshore »), en particulier pour les éoliennes offshore.

Dans le cas des éoliennes offshore, le support flottant supporte, en partie émergée, l'éolienne composée des pales, du rotor, de la nacelle et du mat fixé sur le support flottant. Ces supports flottants peuvent être ancrés au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, tout en limitant les mouvements de l'ensemble.

Divers supports flottants dédiés à l'installation d'éoliennes de plusieurs mégawatts au large des côtes sont en cours de développement dans de nombreux pays. Selon la profondeur du site considéré, plusieurs options de conception sont envisageables. Malgré leur grande diversité, plusieurs familles de support flottant se dégagent. On peut citer :

- les flotteurs de type SPAR, caractérisés par une forme géométrique élancée et comportant un ballast important afin d'abaisser au maximum le centre de gravité de l'ensemble de la structure, et ainsi d'assurer la stabilité (on parle alors de stabilité de masse),
- les flotteurs de type barge : ce sont des supports à faible tirant d'eau et très large. Leur stabilité est assurée par leur large surface de flottaison (on parle alors de stabilité de forme. Cependant ce type de support est très sensible à la houle.
- les supports de type TLP (de l'anglais « Tension Leg Platform » qui peut être traduit par plateforme à lignes tendues), qui ont la particularité d'être amarrés au fond de la mer par des lignes tendues garantissant la stabilité de la structure,
- les flotteurs de type semi-submersible : ce sont des supports constitués d'au moins trois flotteurs reliés par des bras afin d'en assurer la rigidité. Ces supports ont en général un faible déplacement et présentent une inertie de la surface de flottaison importante, leur procurant ainsi un couple de redressement suffisant à leur stabilité. De plus, ce type de flotteur est moins sensible à la houle que les barges.

Le dimensionnement de supports flottants est un problème difficile, récurrent et multi-contraint, car il doit être adapté à chaque application (les contraintes étant très différentes d'une application à l'autre) et aux conditions environnementales du ou des sites sur lesquels ils sont installés (vent, houle, ...). Par exemple, les demandes de brevet FR 2990005 (WO 2013160579), FR 2990477 (WO 2013167820) et FR 2999662 (US 2014167421) proposent diverses solutions à ces problèmes, en modifiant l'ancrage, en reliant les flotteurs entre eux ou par inclinaison du flotteur.

En outre, la demande de brevet FR 3005698 (WO 2014184454) divulgue un support flottant pour éolienne en mer comprenant un ballast permanent et un ballast dynamique pour satisfaire les critères de stabilité statique. Toutefois, ce support flottant ne permet pas l'installation de l'éolienne sur le support à faible profondeur d'eau, par exemple à quai.

La demande de brevet WO 02/28704 A1 décrit un flotteur de type semi-submersible.

Pour ce faire, et afin d'obtenir la stabilité du support flottant pour différentes profondeurs d'eau, la présente invention concerne un support flottant qui comprend des moyens de ballastage pour faire varier le tirant d'eau du support flottant. Le support flottant selon l'invention a une section horizontale variable avec la profondeur, de telle sorte que le moment quadratique de la section du support flottant, au niveau de la surface de flottaison, soit supérieure lorsque le support flottant est déballasté, en comparaison au moment quadratique de la surface de flottaison du support flottant, au niveau de la surface de flottaison, lorsque le support flottant est ballasté. Ainsi, la stabilité du support flottant pour un faible tirant d'eau, principalement induite par la stabilité de forme, est assurée. En position ballastée, la stabilité du support flottant est induite à la fois par la stabilité de masse et la stabilité de forme.

**Le dispositif selon l'invention**

L'invention concerne un support flottant comportant des moyens de ballastage et de déballastage du support flottant pour faire varier le tirant d'eau dudit support flottant, ledit support flottant comportant une section variable avec la profondeur. Le moment quadratique de ladite section dudit support flottant au niveau de la surface de flottaison dudit support flottant déballasté est supérieur au moment quadratique de ladite section dudit support flottant au niveau de la surface de flottaison dudit support flottant ballasté. Le support flottant comporte une partie inférieure comprenant un ballast permanent, une partie intermédiaire comprenant lesdits moyens de ballastage et de déballastage, et une partie supérieure comprenant des moyens de flottaison, ladite surface de flottaison dudit support flottant déballasté étant au niveau de ladite partie intermédiaire et ladite surface de flottaison dudit support flottant ballasté étant au niveau de ladite partie supérieure.

Selon l'invention, ladite section du support flottant au niveau de ladite surface de flottaison dudit support flottant déballasté est supérieure à ladite section dudit support flottant au niveau de ladite surface de flottaison dudit support flottant ballasté.

Avantageusement, dans un plan horizontal dudit support flottant, la dimension extérieure de ladite partie intermédiaire est plus petite que la dimension extérieure de ladite partie inférieure et est plus grande que la dimension extérieure de ladite partie supérieure.

Selon une variante de réalisation, ledit ballast permanent est réalisé en béton armé, ou comporte une structure métallique remplie d'un matériau dense, tel que le béton ou la limaille de fer.

De préférence, ladite partie inférieure a une forme sensiblement tronconique, torique, parallélépipédique, cylindrique ou polygonale.

De manière avantageuse, ladite partie inférieure comporte plusieurs modules assemblés.

Selon une conception de l'invention, ladite partie intermédiaire comprend une coque en acier au moins partiellement étanche.

Alternativement, ladite partie intermédiaire comprend une coque en béton.

Selon une caractéristique de l'invention, le ballast desdits moyens de ballastage comprend de l'eau.

Selon une réalisation de l'invention, ladite partie intermédiaire est formée par un cylindre plein, un tube, un tore, ou par une pluralité de modules répartis de manière continue ou discontinue sur la partie inférieure.

Selon un aspect de l'invention, ladite partie intermédiaire est formée par une structure en acier et une pluralité de modules.

Selon une variante de réalisation, ladite partie intermédiaire est au moins en partie démontable de manière à être retirée lorsque le support flottant est ballasté.

En outre, ledit support flottant peut comporter un module de transition réalisant la transition entre ladite partie intermédiaire et ladite partie supérieure.

Avantageusement, ledit module de transition a sensiblement une forme conique ou tronconique.

De préférence, ledit module de transition est agencé autour de la partie supérieure.

De plus, ledit module de transition peut être agencé au-dessus d'au moins un module formant ladite partie intermédiaire.

Selon une caractéristique de l'invention, ladite partie supérieure est réalisée en béton basse densité, en acier ou en un mix acier/composite.

Selon un aspect de l'invention, ladite partie supérieure comporte plusieurs modules.

En outre, l'invention concerne une installation d'éolienne sur une étendue d'eau comprenant une éolienne et un support flottant selon l'une des caractéristiques précédentes, ladite éolienne étant installée sur ledit support flottant.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un support flottant selon un mode de réalisation de l'invention.
La figure 2 représente un support flottant selon un mode de réalisation de l'invention en position ballastée (figure de gauche) et en position déballastée (figure de droite).
La figure 3 illustre une variante de réalisation du support flottant en position ballastée.
Les figures 4a à 4e représentent des variantes de réalisation du support flottant en position ballastée.
Les figures 5a à 5d illustrent des variantes de réalisation du ballast permanent du support flottant.
Les figures 6a et 6b illustrent des variantes de réalisation de la partie intermédiaire du support flottant.
Les figures 7a à 7e représentent différentes variantes de réalisation de la partie intermédiaire du support flottant.
Les figures 8 et 9 illustrent deux variantes de réalisation de la partie intermédiaire démontable du support flottant.
Les figures 10a à 10d illustrent des variantes de réalisation du module de transition du support flottant.
Les figures 11a et 11b représentent deux variantes de réalisation de la partie supérieure du support flottant.
La figure 12 illustre un paramétrage géométrique d'un flotteur selon un mode de réalisation de l'invention.

**Description détaillée de l'invention**

La présente invention concerne un support flottant. Le support flottant peut être utilisé comme fondation pour une éolienne en mer (« offshore »), mais peut également être adapté à d'autres domaines, tels que la récupération d'hydrocarbures en mer, ou pour la récupération d'une énergie marine (énergie thermique, de la houle, des courants...).

Le support flottant selon l'invention comprend des moyens de ballastage et de déballastage du support flottant, permettant de faire varier le tirant d'eau du support flottant. Le tirant d'eau est la hauteur de la partie immergée du support flottant. Il correspond à la distance verticale entre la surface de flottaison et le point le plus bas du support flottant. La variation du tirant d'eau permet donc de régler la profondeur à laquelle le support flottant est immergé : par exemple pour les opérations portuaires d'installation, de maintenance et de démantèlement, le tirant d'eau doit être faible (car la profondeur d'eau y est peu importante), alors qu'il est préférable d'avoir un tirant d'eau plus élevé, lorsque le support flottant est positionné et ancré au fond marin, et ce pour améliorer la stabilité et le comportement dynamique du flotteur. Avantageusement, les moyens de ballastage et de déballastage permettent l'entrée d'eau du milieu marin dans le support flottant de manière à alourdir le support flottant et ainsi augmenter le tirant d'eau. Alternativement à l'eau de mer, les moyens de ballastage et de déballastage peuvent comprendre un matériau (par exemple un fluide de densité suffisante, de la limaille de fer, ou du sable...) pouvant être retiré pour permettre le déballastage, et donc la réduction du tirant d'eau. De préférence, les moyens de ballastage et de déballastage sont disposés dans la partie basse du support flottant pour améliorer la stabilité de masse lorsque ballasté.

Selon l'invention, le support flottant a une section horizontale variable avec la profondeur. Le support flottant est conçu de telle sorte que le moment quadratique de la surface de flottaison, lorsque le support flottant est déballasté, est plus grande que le moment quadratique de la surface de flottaison du support flottant ballasté. La section du support flottant au niveau de la surface de flottaison correspond à la section horizontale au niveau de la mer (au niveau de la ligne d'eau). Le moment quadratique est une grandeur qui caractérise la géométrie d'une section et se définit par rapport un axe ou un point ; selon l'invention le point ou l'axe correspond à l'axe de l'éolienne. Le moment quadratique $I$ d'une section $S$ peut être déterminé par une formule de la forme : $I = \int_S y^2 ds$, avec $y$ la distance entre le point ou l'axe de référence et un point de la surface. Par exemple, le moment quadratique $I$ d'un cylindre de diamètre D peut être déterminé par une formule du type :

$$I = \frac{\pi d^4}{64}.$$

Ainsi, selon l'invention, le moment quadratique est plus important lorsque le support flottant est déballasté (avec un tirant d'eau faible) que lorsque le support flottant est ballasté, ce qui permet d'assurer la stabilité en faible profondeur d'eau (à tirant d'eau faible) du support flottant et de l'éolienne (ou du système à installer sur le support flottant). Ainsi, en position flotteur déballasté, le tirant d'eau faible permet de réaliser les opérations portuaires d'installation, de maintenance et de démantèlement à faible profondeur d'eau (à quai par exemple). En position déballastée, la stabilité du support flottant équipé de l'éolienne (ou du système installé en mer) est principalement induite par la stabilité de forme.

En position ballastée, la stabilité de forme est réduite, mais est compensée par une stabilité de masse accrue qui provient d'une position du centre de gravité plus basse grâce au ballast supplémentaire. La raideur hydrostatique du flotteur (somme des raideurs de forme et de masse) en pilonnement est ainsi réduite, alors que celle en tangage et roulis est augmentée. Cela permet de garantir la stabilité de l'éolienne flottante, y compris pour les fortes poussées générées par l'éolienne en fonctionnement. Par ailleurs les mouvements du flotteur en position ballastée sont limités, d'une part grâce à la diminution de la raideur hydrostatique en pilonnement, ce qui permet d'augmenter sensiblement les périodes propres, et d'autre part grâce à une surface de flottaison moins importante, ce qui permet de limiter les efforts d'excitation générés par la houle.

Pendant la phase de transition entre les positions complètement ballastée et complètement déballastée, c'est-à-dire lorsque la ligne d'eau se situe dans une position intermédiaire, la stabilité du flotteur peut être assurée par la géométrie du flotteur, qui peut être déterminée de manière à ce que les courbes de raideurs en pilonnement, tangage et roulis en fonction du tirant d'eau soient sensiblement continues.

Ainsi, le support flottant selon l'invention possède des caractéristiques géométriques et de masse permettant de profiter à la fois de la stabilité de forme et de la stabilité de masse.

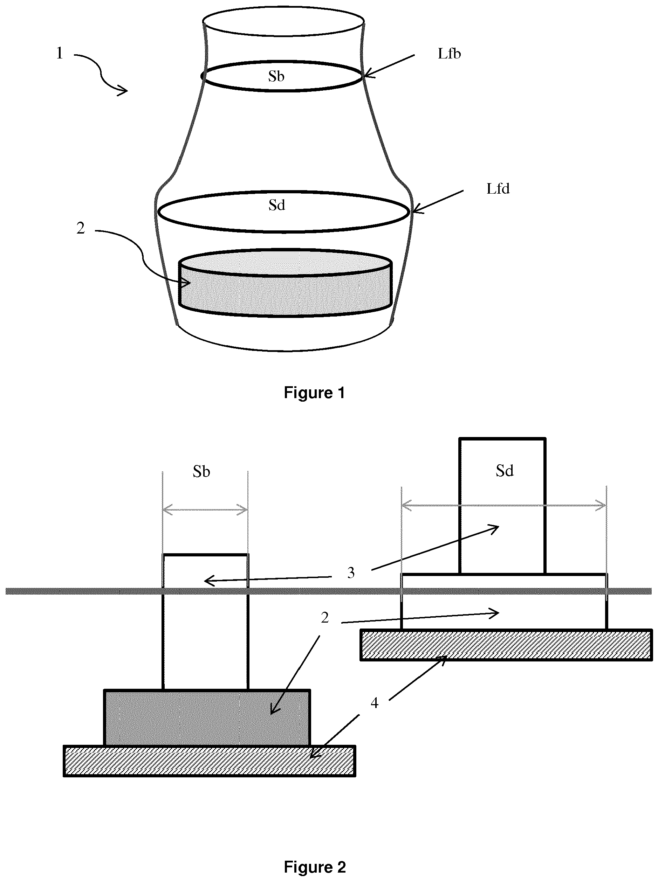

La figure 1 représente un support flottant 1 selon un mode de réalisation de l'invention. La figure 1 illustre de manière non limitative un exemple de variante de la section du support flottant 1 en fonction de la profondeur. Le support flottant 1 comprend des moyens de ballastage 2. Le niveau de la ligne d'eau moyenne en position déballastée est présenté par la référence Lfd. En position ballastée, le niveau de la ligne d'eau moyenne est présenté par la référence Lfb. Grâce à la section variable du support flottant qui décroit entre les lignes Lfd et Lfb, la section Sb et le moment quadratique de la surface de flottaison du support flottant ballasté sont inférieures respectivement à la section Sd et au moment quadratique de la surface de flottaison du support flottant déballasté.

Selon un mode de réalisation de l'invention, le support flottant comprend :

- une partie inférieure comprenant un ballast permanent, qui constitue une masse fixe à la base du support flottant permettant la stabilité de masse. De préférence, la partie inférieure comprend des matériaux lourds, tels que le béton.

- une partie intermédiaire qui comprend les moyens de ballastage, servant également de moyens de déballastage. Cette partie intermédiaire correspond à un premier module de flottabilité ballastable. Lors des phases d'installation et de maintenance, ou plus généralement lorsqu'un tirant d'eau faible est requis de manière temporaire, ce module est déballasté, et la surface de flottaison est au niveau de ce module. Il apporte ainsi la flottabilité de l'ensemble. La stabilité du flotteur est alors assurée principalement par sa stabilité de forme qui provient de son moment quadratique à la surface de flottaison. Lorsque la profondeur d'eau est suffisante, le tirant d'eau est augmenté en ballastant complètement le module avec de l'eau de mer ou un autre fluide ou matériau dense, ce qui permet d'augmenter le tirant d'eau et d'améliorer les performances du flotteur en terme de stabilité et de comportement dynamique. Le module n'assure plus ni flottabilité, ni raideur hydrostatique de forme, mais contribue à la stabilité de masse.

- une partie supérieure, dite flotteur principal, qui correspond au module de flottabilité principal. Il permet d'assurer, lorsque le flotteur est ballasté, la flottabilité du support flottant équipé d'une éolienne ou de tout système devant être installé sur le support flottant. De préférence, la partie supérieure est de conception légère de manière à ne pas pénaliser la stabilité de masse de l'ensemble.

La dénomination « inférieur/supérieur » est à considérer selon la direction verticale du support flottant dans sa position d'utilisation : le ballast permanent de la partie inférieure se retrouve immergé en profondeur et la partie supérieure dépasse partiellement de la surface de l'eau. La partie intermédiaire est placée entre les extrémités des parties inférieure et supérieure.

En position déballastée, la ligne d'eau moyenne est au niveau de la partie intermédiaire, et donc la partie intermédiaire est partiellement émergée. En position ballastée, la ligne d'eau moyenne est au niveau du flotteur principal (partie supérieure) et donc la partie intermédiaire est complètement immergée.

De préférence, dans le plan horizontal, les dimensions de la partie intermédiaire sont réduites par rapport aux dimensions de la partie inférieure et sont plus importantes que les dimensions de la partie supérieure. Ainsi la section et donc le moment quadratique au niveau de la surface de flottaison est supérieure en position déballastée à celle en position ballastée. Par exemple, avec les trois parties de forme sensiblement cylindrique, le diamètre de la partie inférieure est plus grand que le diamètre de la partie intermédiaire, qui est lui-même plus grand que le diamètre de la partie supérieure.

En outre, le support flottant selon ce mode de réalisation de l'invention peut comprendre, de manière optionnelle, un module de transition, qui permet de réaliser la transition géométrique entre la partie intermédiaire et la partie supérieure. Le module de transition assure, lors des opérations de ballastage/déballastage, la continuité de la raideur hydrostatique du support en fonction du tirant d'eau. Sa géométrie est définie de manière à ce que la stabilité du flotteur soit assurée quel que soit le tirant d'eau. Le module de transition peut être ballastable ou non ballastable.

La figure 2 illustre un exemple non limitatif de ce mode de réalisation sans module de transition. La figure de gauche correspondant à une position ballastée, et la figure de droite à une position déballastée. Le support flottant comporte une partie inférieure 4, une partie intermédiaire 2 et une partie supérieure 3. Ces trois parties sont représentées de manière schématique, mais elles peuvent prendre l'une quelconque des formes des variantes de réalisation décrites ci-dessous. Selon la figure 2, les dimensions de la partie intermédiaire 2 sont plus petites que les dimensions de la partie inférieure 4 et sont plus grandes que les dimensions de la partie supérieure 3. En position déballastée (figure de droite), la partie intermédiaire 2 ne comprend pas de ballast, la ligne de flottaison est au niveau de la partie intermédiaire 2, et le tirant d'eau est faible. De plus, la section Sd au niveau de la surface de flottaison est celle de la partie intermédiaire 2. En position ballastée (figure de gauche), la partie intermédiaire 2 comprend du ballast, la ligne de flottaison est au niveau de la partie supérieure 3, et le tirant d'eau est élevé. De plus, la section Sb au niveau de la surface de flottaison est celle de partie supérieure 3. Etant donné que, pour cet exemple de réalisation, la section horizontale de la partie intermédiaire 2 est plus grande que la section horizontale de la partie supérieure 3, la section Sd est plus grande que la section Sb.

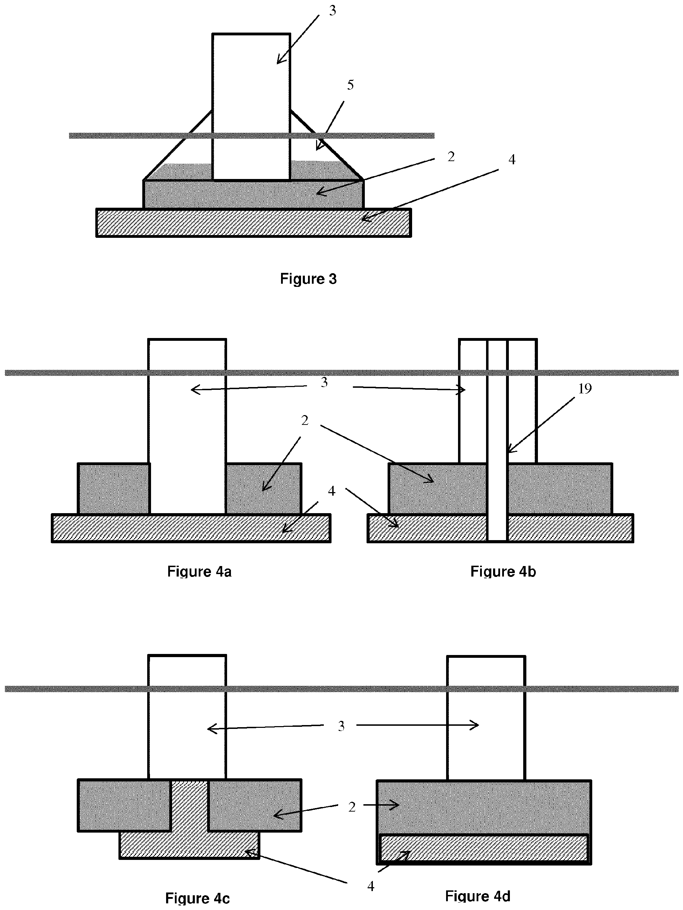

La figure 3 illustre une variante de réalisation du support flottant selon la figure 2, qui comprend en outre un module de transition 5 réalisant une transition géométrique entre la partie intermédiaire 2 et la partie supérieure 3. Tel qu'illustré, mais de manière non limitative, le module de transition est ballastable et a une forme tronconique qui relie de manière continue le diamètre de la partie intermédiaire 2 au diamètre la partie supérieure 3.

Dans la suite de la description, plusieurs variantes de ce mode de réalisation (support flottant avec partie inférieure, partie intermédiaire et partie supérieure) sont décrites et illustrées. Les variantes compatibles technologiquement peuvent être combinées entre elles, de manière à combiner leurs effets. Notamment, le module de transition peut être ajouté à toutes les variantes de réalisation qui n'en sont pas pourvus.

Selon une variante de réalisation, le flotteur principal (la partie supérieure) passe à travers la partie intermédiaire, ce qui permet de reprendre directement la masse et les efforts de l'éolienne (ou du système à installer en mer) par le ballast permanent de la partie inférieure.

La figure 4a illustre un exemple de cette variante de réalisation, dans lequel la partie supérieure 3 passe au travers de la partie intermédiaire 2, et est agencée sur la partie inférieure 4. La partie intermédiaire 2 comporte alors une ouverture permettant le passage de la partie supérieure 3.

Selon un aspect de l'invention, un tube central peut passer à travers les trois parties, notamment pour le passage de câbles, tels que des câbles électriques.

La figure 4b illustre un exemple de cette variante de réalisation, dans lequel un tube central 19 passe au travers de la partie supérieure 3, de la partie intermédiaire 2 et de la partie inférieure 4.

Selon une caractéristique de l'invention, la partie inférieure peut passer au travers de la partie intermédiaire. La partie inférieure (avec le ballast permanent) peut aussi avoir une dimension plus petite ou égale à la dimension de la partie intermédiaire. Alternativement, la partie inférieure peut avoir une dimension plus grande que la dimension de la partie intermédiaire.

La figure 4c illustre un exemple de cette variante de réalisation, dans lequel la partie inférieure 4 passe en travers la partie intermédiaire 2. La partie inférieure 4 possède, dans le plan horizontal, une dimension plus petite que la dimension de la partie intermédiaire 2.

La figure 4d présente une réalisation de l'invention dans laquelle la partie inférieure 4, comprenant le ballast permanent, est intégrée dans la partie intermédiaire 2. Dans ce cas, le ballast permanent est de dimension plus faible que celle de la partie intermédiaire 2.

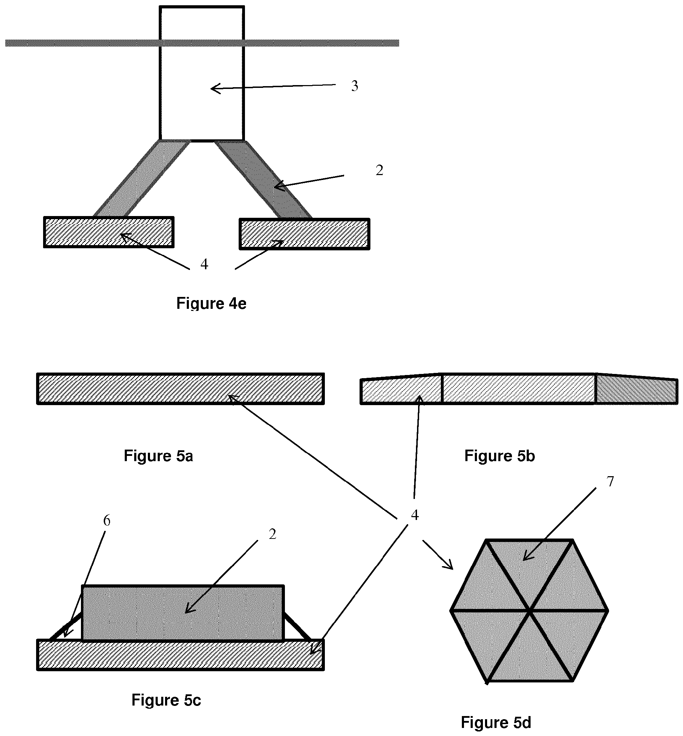

La figure 4e illustre une réalisation de l'invention dans laquelle les sections et moments quadratiques de la surface de flottaison ne sont pas corrélés. Ainsi, la section ballastée Sb est plus grande que la section déballastée Sd, alors que le moment quadratique de la surface de flottaison ballastée Ib est plus petit que le moment quadratique de la surface de flottaison déballastée Id.

Le ballast permanent peut également permettre de créer de la masse d'eau ajoutée et de l'amortissement hydrodynamique, pour respectivement augmenter les périodes propres du flotteur en les décalant en dehors de périodes de houle, et pour réduire les amplitudes de mouvement du support flottant sous l'effet des vagues. Pour cela, sa dimension dans un plan horizontal est supérieure à la dimension de la partie intermédiaire et/ou à celle de la partie supérieure.

De plus, le ballast permanent permet, d'un point de vue structurel, de reprendre la masse de l'éolienne (ou le système installé en mer) et une partie des efforts générés par le vent sur l'éolienne.

Avantageusement, le ballast permanent est réalisé dans un matériau lourd. Par exemple, le ballast permanent peut être en béton armé. Alternativement, le ballast permanent est composé d'une structure en métal, de préférence en acier, remplie d'un matériau lourd, tel que le béton ou la limaille de fer.

Selon une configuration de l'invention, le ballast permanent peut avoir une forme sensiblement cylindrique. La figure 5a illustre un exemple de cette variante de réalisation, pour laquelle la partie inférieure 4 comprenant un ballast permanent cylindrique.

Selon une autre conception, le ballast permanent peut avoir une forme sensiblement tronconique. La figure 5b illustre un exemple de cette variante de réalisation, pour laquelle la partie inférieure 4 comporte un ballast permanent tronconique.

Selon des variantes de réalisation non illustrées, le ballast permanent, et donc la partie inférieure, peut avoir une forme sensiblement torique, parallélépipédique, cubique, polygonale...

Selon une possibilité, la partie inférieure peut être reliée avec la partie intermédiaire au moyen de renforts. La figure 5c illustre un exemple de cette variante de réalisation, pour laquelle un ou plusieurs renforts 6 sont agencés entre la partie inférieure 4 et la partie intermédiaire 2. Alternativement, la partie inférieure peut être reliée avec la partie supérieure au moyen de renforts, notamment lorsque la partie intermédiaire est démontable.

De plus, le ballast permanent peut être constitué de plusieurs éléments préfabriqués et assemblés à quai. L'assemblage peut prendre l'une quelconque des formes décrites précédemment. La figure 5d représente un exemple de partie inférieure 4 comprenant plusieurs modules 7. Selon l'exemple illustré, la partie inférieure est formée de six modules triangulaires, dont l'assemblage forme un hexagone.

Selon un aspect, la partie intermédiaire (le module de flottabilité ballastable) est préférentiellement composée d'une coque en métal, de préférence en acier, complètement étanche (coque fermée) ou semi-étanche (coque ouverte sur la partie basse, c'est-à-dire ouverte vers la partie inférieure). La coque semi-étanche permet de faire l'économie, en masse et en coût, de la partie inférieure de la coque métallique, mais ne permet pas de garantir l'étanchéité de cette coque sur le long terme puisque l'eau peut circuler entre le béton et la coque. L'étanchéité de la coque n'étant requise qu'en position déballastée et donc de manière très temporaire (installation, maintenance), les éventuelles entrées d'eau peuvent être compensées par un système temporaire de pompes. La partie intermédiaire peut aussi être réalisée en béton, et intégrée à la partie inférieure comprenant le ballast permanent 4.

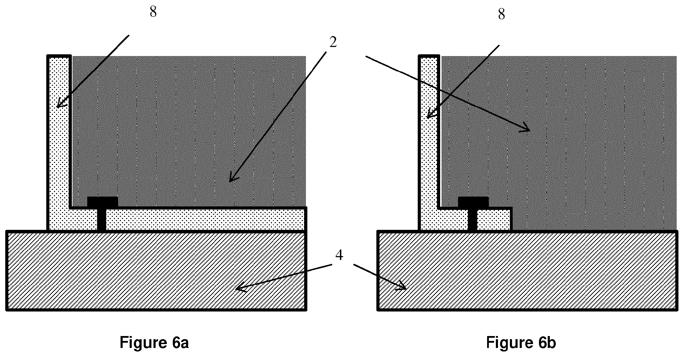

La figure 6a représente partiellement une partie intermédiaire 2 pour la variante de réalisation décrite précédemment, pour laquelle la partie intermédiaire 2 comporte une coque étanche 8, qui est fermée, et qui possède une paroi au niveau de la partie inférieure 4. Pour cette variante, l'eau de mer ne peut pas pénétrer dans le ballast 2.

La figure 6b représente partiellement une partie intermédiaire 2 pour la variante de réalisation décrite précédemment, pour laquelle la partie intermédiaire 2 comporte une coque semi-étanche 8, qui possède des parois latérales mais ne possède pas de paroi au niveau de la partie inférieure 4. Pour cette variante, il y a un risque limité de pénétration de l'eau de mer dans le ballast 2.

Selon une mise en oeuvre de l'invention, la partie intermédiaire peut être réalisée en une seule pièce ayant une forme sensiblement cylindrique (plein ou creux) ou torique. Alternativement, la partie intermédiaire peut comporter une pluralité de modules répartis de manière continue ou discontinue sur la partie inférieure.

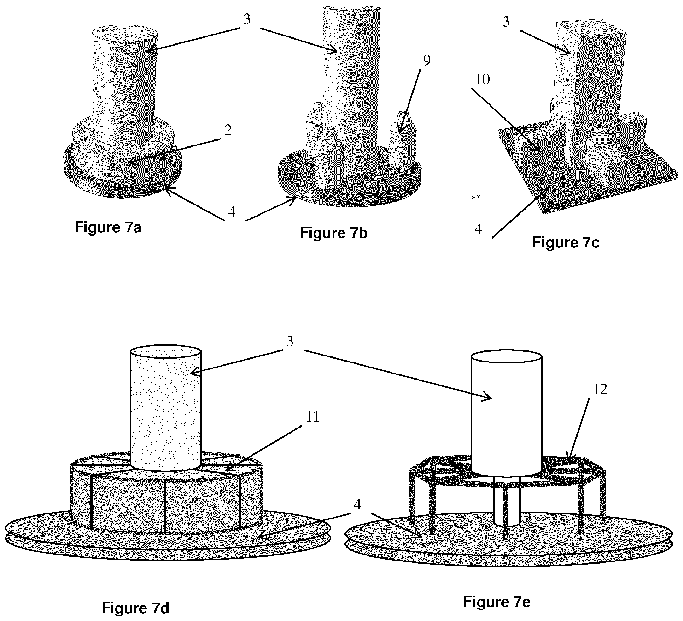

La figure 7a représente une variante de réalisation, pour laquelle la partie intermédiaire 2 est réalisée en une seule pièce, et a une forme cylindrique. Telles qu'illustrées de manière non limitative, les parties inférieure 4 et supérieure 3 ont également sensiblement une forme cylindrique.

La figure 7b représente une variante de réalisation, pour laquelle la partie intermédiaire 2 est formée par une pluralité de modules 9. Les modules 9 sont répartis de manière discontinue sur la partie inférieure 4. Les modules 9 ont sensiblement une forme cylindrique et sont éloignés les uns des autres, et ne sont pas en contact avec la partie supérieure 3. Telles qu'illustrées de manière non limitative, les parties inférieure 4 et supérieure 3 ont sensiblement une forme cylindrique. Alternativement, les modules peuvent être jointifs entre eux ou être jointifs avec la partie intermédiaire.

La figure 7c illustre une variante de réalisation, pour laquelle la partie intermédiaire 2 est formée par une pluralité de modules 10. Les modules 10 sont répartis de manière discontinue sur la partie inférieure 4. Les modules 10 ont sensiblement une forme parallélépipédique et sont éloignés les uns des autres, et sont en contact avec la partie supérieure 3. Telles qu'illustrées de manière non limitative, les parties inférieure 4 et supérieure 3 ont sensiblement une forme parallélépipédique. Alternativement, les modules peuvent être répartis de manière jointive En outre, les modules peuvent prendre d'autres formes : cylindrique, tubulaire...

Les figures 7d et 7e illustrent une variante de réalisation avec et sans les volumes de flottabilité, pour laquelle la partie intermédiaire est formée par une pluralité de modules 11. Les modules 11 sont répartis de manière continue sur la partie inférieure 4 autour de la partie supérieure 3. Les modules 11 peuvent être contenus dans une structure 12 formant une cage.

De manière avantageuse, le module de flottabilité ballastable (la partie intermédiaire) peut être démontable, et ainsi être réutilisé pour différents flotteurs lors de leur installation. La partie démontable est retirée lorsque le support flottant est en position ballastée et ancrée sur le fond marin. Dans ce cas, elle n'assure plus le transfert de charge vers la partie basse. Ce module démontable peut être de forme torique, ou cylindrique, ou de forme optimisée pour un démontage simple, ou être constitué de plusieurs éléments répartis de manière continue ou discontinue. Il peut également être constitué de plusieurs sous modules souples enfermés dans une structure de type cage, qui permet le transfert des efforts vers les parties intermédiaire et inférieure.

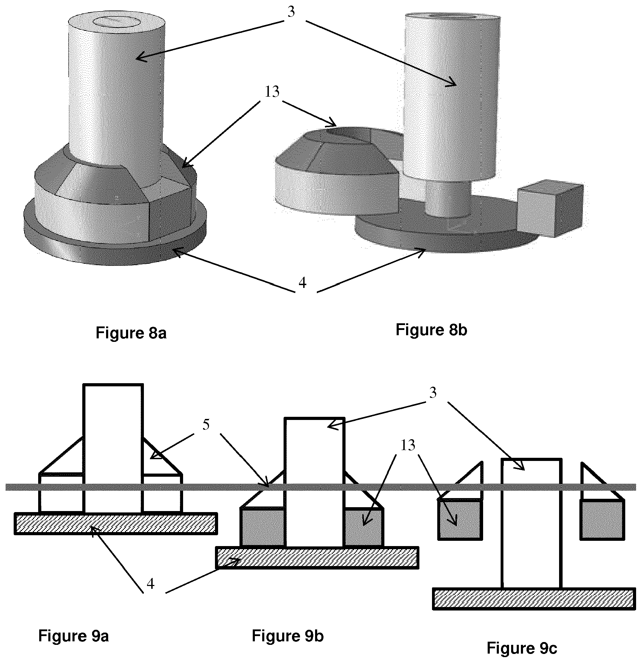

Les figures 8a et 8b illustrent une variante de réalisation, pour laquelle la partie intermédiaire comprend un module 13 démontable. Le module 13 peut avoir de préférence une forme d'une portion de cylindre ou tronconique qui, en position montée, entoure la partie supérieure 3 et est agencée sur la partie inférieure 4.

Les figures 9a à 9c illustrent une variante de réalisation pour différentes position de ballastage, pour laquelle la partie intermédiaire comprend une pluralité de modules 13 démontables surmontés de modules de transition 5. Les ballast des modules 13 sont progressivement remplis et déconnectés lorsque la quantité d'air restante permet d'assurer la flottabilité des ballasts, qui remontent ainsi à la surface pour être ensuite remorqués.

Pour les variantes de réalisation comportant un module de transition, dans les phases transitoires de ballastage et de déballastage, le module de transition permet de garantir la stabilité du flotteur en complément du ballast permanent, en assurant la continuité de la raideur hydrostatique en fonction du tirant d'eau.

Pour cela, la surface de flottaison du module de transition, dans sa partie supérieure, peut décroître de manière sensiblement continue vers celle du flotteur principal (partie supérieure), par une forme conique par exemple. L'angle formé par le cône peut alors être défini de manière à remplir les critères de stabilité tout au long de ces opérations.

Selon une conception du flotteur comportant un module de transisiton, le module de transition peut être ballastable ou non ballastable. Il peut aussi être intégré au module de flottabilité ballastable dans le cas où celui-ci est démontable (cf. figures 9a à 9c).

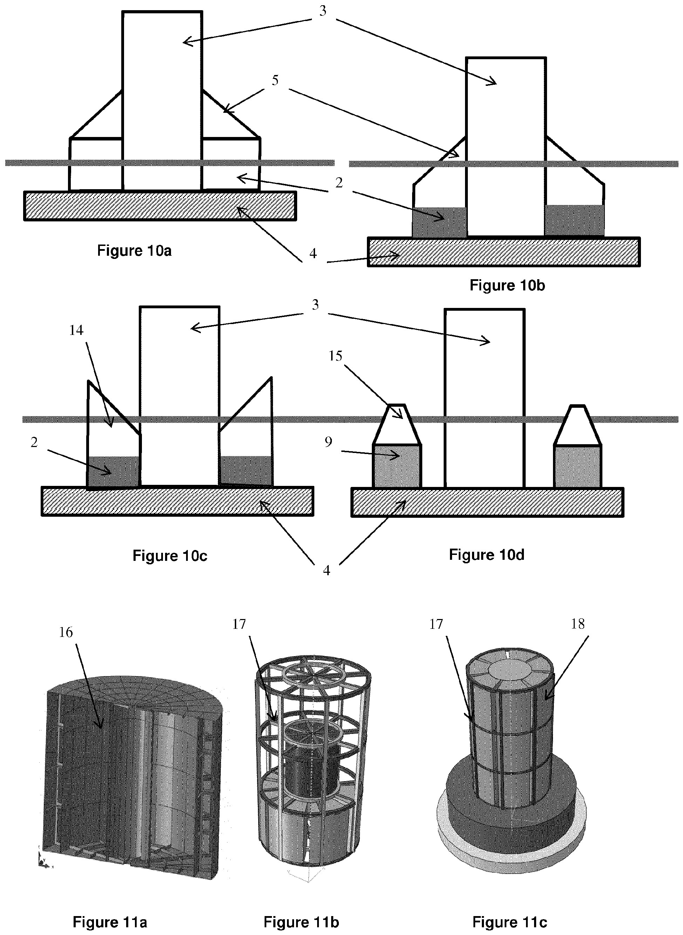

Les figures 10a et 10b illustrent une variante de réalisation, pour laquelle le support flottant comporte un module de transition 5 de forme sensiblement tronconique. La figure 10a correspond à la position déballastée du support flottant, et la figure 10b correspond à la position ballastée du support flottant. Le module de transition 5 est agencé autour de la partie supérieure 3 et au-dessus de la partie intermédiaire 2. En position ballastée, la surface de l'eau est au niveau du module de transition 5, qui a une section plus petite (car décroissante) que la section de la partie inférieure.

La figure 10c illustre une variante de réalisation, pour laquelle le support flottant comporte un module de transition 14. Le module de transition 14 a sensiblement une forme cylindrique, dont le diamètre extérieur correspondant au diamètre extérieur de la partie inférieure 2 et possède un diamètre intérieur qui décroit avec la profondeur.

La figure 10d illustre une variante de réalisation, pour laquelle le support flottant comporte une pluralité de modules de transition 15 disposés sur une pluralité de modules 9 de ballastage. Les modules de transition 15 ont sensiblement une forme tronconique.

La partie supérieure assure la flottabilité du support flottant et sa stabilité de forme lorsque le flotteur est ballasté. Elle peut en outre assurer la reprise d'une partie des efforts générés par l'éolienne (ou le système à installer sur le support flottant) et des ancrages. Elle est dimensionnée de manière à être aussi légère que possible pour ne pas nuire à la stabilité de l'ensemble du flotteur. Pour se faire, elle peut être réalisée en matériau léger tel que le béton basse densité, ou en acier, ou en un matériau mix acier/composite.

La partie supérieure peut comprendre une pluralité de modules de flottabilité. Les modules de flottabilité peuvent être réalisés sous forme d'un système à double coque. La figure 11a illustre une variante de réalisation d'un tel module de flottabilité à double coque 16.

Alternativement la partie supérieure peut comprendre une pluralité de modules de flottabilité en acier ou de modules de flottabilité souples (matériaux plastiques, structures gonflables, mousses) répartis au sein d'une structure métallique non étanche, de préférence en acier. La structure métallique permet d'assurer le transfert de charge vers la partie basse, et de reprendre une partie des efforts générés par l'éolienne (ou le système à installer sur le support flottant) et les ancrages. Les figures 11b et 11c illustrent une telle variante de réalisation de la partie supérieure comprenant une structure métallique 17 et des modules souples 18.

En outre, la partie supérieure peut avoir une section variable qui croit avec la profondeur. Ainsi, lors du ballastage, la section au niveau de la surface de flottaison décroit, ce qui permet d'obtenir une continuité de la raideur hydrostatique sans module de transition. Par

EP 3 286 069 B1

exemple, la partie supérieure peut avoir au moins une portion de forme sensiblement conique.

Le support flottant selon l'invention peut comprendre d'autres parties que celles décrites. En outre, le support flottant peut comporter des moyens pour fixer des lignes d'ancrage.

La présente invention concerne également une installation d'éolienne sur une étendue d'eau (mer par exemple). L'installation comprend une éolienne à axe vertical ou à axe horizontal, et un support flottant selon l'une quelconque des combinaisons de variantes décrites précédemment. Le support flottant selon l'invention permet une stabilité de l'éolienne à faible tirant d'eau et pour un tirant d'eau plus élevé.

Exemple

Dans cette partie, un exemple de dimensionnement d'un support flottant selon l'invention est présenté. Le flotteur principal (partie supérieure), le module de flottabilité ballastable (partie intermédiaire) et le ballast permanent (partie inférieure) sont supposés de forme cylindrique.

Une éolienne générique de 5MW est installée sur le flotteur.

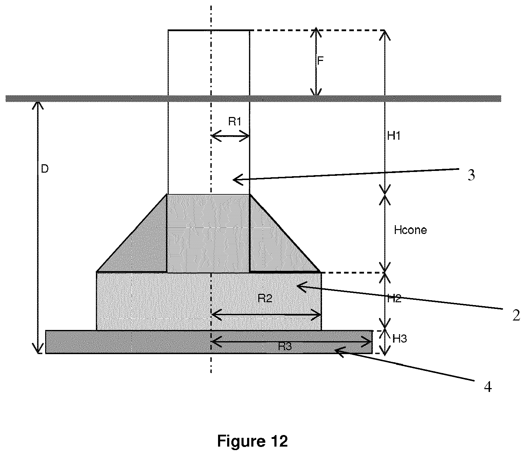

La figure 12 représente un paramétrage géométrique d'un support selon l'invention comprenant une partie inférieure 4, une partie intermédiaire 2 et une partie supérieure 3.

Le support flottant peut avoir les dimensions suivantes pour supporter une éolienne de 5 MW :

Tableau 1 : Caractéristiques du support flottant

| R1 | 8 m |
|---|---|
| R2 | 16 m |
| R3 | 22 m |
| H1 | 30 m |
| H2 | 5 m |
| H3 | 2 m |
| Hcone | 16 m |
| Masse d'acier | 640 tonnes |
| Masse de béton | 6 000 tonnes |
| Masse d'eau | 12 000 tonnes |
| Période propre pilonnement | 30 s |

Le support flottant selon l'exemple permet la stabilité de l'éolienne flottante en position ballastée et en position déballastée.

Revendications

1. Support flottant comportant des moyens de ballastage et de déballastage (2) du support flottant (1) pour faire varier le tirant d'eau dudit support flottant, ledit support flottant (1) comportant une section variable avec la profondeur, dans lequel le moment quadratique de ladite section (Sd) dudit support flottant au niveau de la surface de flottaison (Lfd) dudit support flottant déballasté est supérieur au moment quadratique de ladite section (Sb) dudit support flottant au niveau de la surface de flottaison (Lfb) dudit support flottant ballasté, **caractérisé en ce que** ledit support flottant (1) comporte une partie inférieure (4) comprenant un ballast permanent, une partie intermédiaire (2) comprenant lesdits moyens de ballastage et de déballastage, et une partie supérieure (3) comprenant des moyens de flottaison, ladite surface de flottaison (Sd) dudit support flottant déballasté étant au niveau de ladite partie intermédiaire (2) et ladite surface de flottaison (Sb) dudit support flottant ballasté étant au niveau de ladite partie supérieure (3, 13).

2. Support flottant selon la revendication 1, dans lequel ladite section (Sd) du support flottant au niveau de ladite surface de flottaison (Lfd) dudit support flottant déballasté est supérieure à ladite section (Sb) dudit support flottant au niveau de ladite surface de flottaison (Lfb) dudit support flottant ballasté.

3. Support flottant selon l'une des revendications précédentes, dans lequel, dans un plan horizontal dudit support flottant, la dimension extérieure de ladite partie intermédiaire (2) est plus petite que la dimension extérieure de ladite partie inférieure (4) et est plus grande que la dimension extérieure de ladite partie supérieure (3, 13).

4. Support flottant selon l'une des revendications précédentes, dans lequel ledit ballast permanent est réalisé en béton armé, ou comporte une structure métallique remplie d'un matériau dense, tel que le béton ou la limaille de fer.

5. Support flottant selon l'une des revendications précédentes, dans lequel ladite partie inférieure (4) a une forme sensiblement tronconique, torique, parallélépipédique, cylindrique ou polygonale.

6. Support flottant selon l'une des revendications précédentes, dans lequel ladite partie inférieure (4) comporte plusieurs modules (7) assemblés.

7. Support flottant selon l'une des revendications précédentes, dans lequel ladite partie intermédiaire (2) comprend une coque en acier (8) au moins partiellement étanche.

8

8. Support flottant selon l'une des revendications précédentes, dans lequel ladite partie intermédiaire comprend une coque en béton.

9. Support flottant selon l'une des revendications précédentes, dans lequel le ballast desdits moyens de ballastage (2) comprend de l'eau.

10. Support flottant selon l'une des revendications précédentes, dans lequel ladite partie intermédiaire (2) est formée par un cylindre plein, un tube, un tore, ou par une pluralité de modules (9, 10, 11) répartis de manière continue ou discontinue sur la partie inférieure (4).

11. Support flottant selon la revendication 10, dans lequel ladite partie intermédiaire (2) est formée par une structure en acier (12) et une pluralité de modules (11).

12. Support flottant selon l'une des revendications précédentes, dans lequel ladite partie intermédiaire (13) est au moins en partie démontable de manière à être retirée lorsque le support flottant est ballasté.

13. Support flottant selon l'une des revendications précédentes, dans lequel ledit support flottant (1) comporte un module de transition (5, 14, 15) réalisant la transition entre ladite partie intermédiaire (2) et ladite partie supérieure (3).

14. Support selon la revendication 13, dans lequel ledit module de transition (5) a sensiblement une forme conique ou tronconique.

15. Support selon l'une des revendications 13 ou 14, dans lequel ledit module de transition (5, 14, 15) est agencé autour de la partie supérieure.

16. Support selon l'une des revendications 13 ou 14, dans lequel ledit module de transition (15) est agencé au-dessus d'au moins un module (9, 10, 11) formant ladite partie intermédiaire (2).

17. Support selon l'une des revendications précédentes, dans lequel ladite partie supérieure (3) est réalisée en béton basse densité, en acier ou en un mix acier/composite.

18. Support selon l'une des revendications précédentes, dans lequel ladite partie supérieure (3) comporte plusieurs modules (16).

19. Installation d'éolienne sur une étendue d'eau comprenant une éolienne et un support flottant (1) selon l'une des revendications précédentes, ladite éolienne étant installée sur ledit support flottant.

**Patentansprüche**

1. Schwimmender Träger umfassend Ballastaufnahme- und Ballastabgabemittel (2) des schwimmenden Trägers (1), um den Tiefgang des schwimmenden Trägers zu variieren, wobei der schwimmende Träger (1) einen mit der Tiefe variablen Querschnitt umfasst, wobei das Flächenträgheitsmoment des Querschnitts (Sd) des schwimmenden Trägers im Bereich der Schwimmfläche (Lfd) des von Ballast befreiten Trägers größer als das Flächenträgheitsmoment des Querschnitts (Sb) des schwimmenden Trägers im Bereich der Schwimmfläche (Lfb) des mit Ballast beaufschlagten schwimmenden Trägers ist, **dadurch gekennzeichnet, dass** der schwimmende Träger (1) einen unteren Teil (4), umfassend einen Dauerballast, einen Zwischenteil (2), umfassend die Ballastaufnahme- und Ballastabgabemittel, und einen oberen Teil (3), umfassend Schwimmkörper, umfasst, wobei die Schwimmfläche (Sd) des von Ballast befreiten schwimmenden Trägers im Bereich des Zwischenteils (2) ist, und die Schwimmfläche (Sb) des mit Ballast beaufschlagten schwimmenden Trägers im Bereich des oberen Teils (3, 13) ist.

2. Schwimmender Träger nach Anspruch 1, bei dem der Querschnitt (Sd) des schwimmenden Trägers im Bereich der Schwimmfläche (Lfd) des von Ballast befreiten schwimmenden Trägers größer als der Querschnitt (Sb) des schwimmenden Trägers im Bereich der Schwimmfläche (Lfb) des mit Ballast beaufschlagten schwimmenden Trägers ist.

3. Schwimmender Träger nach einem der vorhergehenden Ansprüche, bei dem in einer Horizontalebene des schwimmenden Trägers die Außenabmessung des Zwischenteils (2) kleiner als die Außenabmessung des unteren Teils (4) und größer als die Außenabmessung des oberen Teils (3, 13) ist.

4. Schwimmender Träger nach einem der vorhergehenden Ansprüche, bei dem der Dauerballast aus Stahlbeton hergestellt ist oder eine mit einem dichten Material, wie Beton oder Eisenstaub, gefüllte Metallstruktur umfasst.

5. Schwimmender Träger nach einem der vorhergehenden Ansprüche, bei dem der untere Teil (4) eine im Wesentlichen kegelstumpfartige, torische, parallelflache, zylindrische oder polygonale Form hat.

6. Schwimmender Träger nach einem der vorhergehenden Ansprüche, bei dem der untere Teil (4) mehrere zusammengefügte Module (7) umfasst.

7. Schwimmender Träger nach einem der vorhergehenden Ansprüche, bei dem der Zwischenteil (2) eine zumindest teilweise dichte Schale aus Stahl (8) umfasst.

**8.** Schwimmender Träger nach einem der vorhergehenden Ansprüche, bei dem der Zwischenteil eine Schale aus Beton umfasst.

**9.** Schwimmender Träger nach einem der vorhergehenden Ansprüche, bei dem der Ballast der Ballastaufnahmemittel (2) Wasser umfasst.

**10.** Schwimmender Träger nach einem der vorhergehenden Ansprüche, bei dem der Zwischenteil (2) von einem vollen Zylinder, einem Rohr, einem Torus oder von einer Vielzahl von Modulen (9, 10, 11) gebildet ist, die kontinuierlich oder diskontinuierlich auf dem unteren Teil (4) verteilt sind.

**11.** Schwimmender Träger nach Anspruch 10, bei dem der Zwischenteil (2) von einer Stahlstruktur (12) und einer Vielzahl von Modulen (11) gebildet ist.

**12.** Schwimmender Träger nach einem der vorhergehenden Ansprüche, bei dem der Zwischenteil (13) zumindest teilweise demontierbar ist, um abgenommen zu werden, wenn der schwimmende Träger mit Ballast beaufschlagt wird.

**13.** Schwimmender Träger nach einem der vorhergehenden Ansprüche, bei dem der schwimmende Träger (1) ein Übergangsmodul (5, 14, 15) umfasst, das den Übergang zwischen dem Zwischenteil (2) und dem oberen Teil (3) herstellt.

**14.** Träger nach Anspruch 13, bei dem das Übergangsmodul (5) im Wesentlichen eine konische oder kegelstumpfartige Form hat.

**15.** Träger nach einem der Ansprüche 13 oder 14, bei dem das Übergangsmodul (5, 14, 15) um den oberen Teil herum angeordnet ist.

**16.** Träger nach einem der Ansprüche 13 oder 14, bei dem das Übergangsmodul (15) über mindestens einem Modul (9, 10, 11), das den Zwischenteil (2) bildet, angeordnet ist.

**17.** Träger nach einem der vorhergehenden Ansprüche, bei dem der obere Teil (3) aus Beton mit geringer Dichte, aus Stahl oder einem Mix aus Stahl/Verbundstoff hergestellt ist.

**18.** Träger nach einem der vorhergehenden Ansprüche, bei dem der obere Teil (3) mehrere Module (16) umfasst.

**19.** Windenergieanlage auf einer Wasserfläche, umfassend ein Windrad und einen schwimmenden Träger (1) nach einem der vorhergehenden Ansprüche, wobei das Windrad auf dem schwimmenden Träger installiert ist.

**Claims**

**1.** A floating support structure comprising means (2) for ballasting and deballasting floating support structure (1) so as to vary the draft of said floating support structure, said floating support structure (1) comprising a section that varies with depth, wherein the quadratic moment of said section (Sd) of said floating support structure at the level of the waterplane area (Lfd) of said deballasted floating support structure is greater than the quadratic moment of said section (Sb) of said floating support structure at the level of the waterplane area (Lfb) of said ballasted floating support structure, **characterized in that** said floating support structure (1) comprises a lower part (4) comprising a permanent ballast, an intermediate part (2) comprising said ballasting and deballasting means, and an upper part (3) comprising buoyancy means, said waterplane area (Sd) of said deballasted floating support structure being at the level of said intermediate part (2) and said waterplane area (Sb) of said ballasted floating support structure being at the level of said upper part (3).

**2.** A floating support structure as claimed in claim 1, wherein said section (Sd) of the floating support structure at the level of said waterplane area (Lfd) of said deballasted floating support structure is greater than said section (Sb) of said floating support structure at the level of said waterplane area (Lfb) of said ballasted floating support structure.

**3.** A floating support structure as claimed in any one of the previous claims wherein, in a horizontal plane of said floating support structure, the exterior dimension of said intermediate part (2) is smaller than the exterior dimension of said lower part (4) and it is greater than the exterior dimension of said upper part (3).

**4.** A floating support structure as claimed in any one of the previous claims, wherein said permanent ballast is made of reinforced concrete or it comprises a metallic structure filled with a dense material, such as concrete or iron filings.

**5.** A floating support structure as claimed in any one of the previous claims, wherein said lower part (4) has a substantially truncated, toric, parallelepipedic, cylindrical or polygonal shape.

**6.** A floating support structure as claimed in any one of the previous claims, wherein said lower part (4) comprises several assembled modules (7).

**7.** A floating support structure as claimed in any one of the previous claims, wherein said intermediate part (2) comprises an at least partly sealed steel shell (8).

**8.** A floating support structure as claimed in any one of the previous claims, wherein said intermediate part comprises a concrete shell.

**9.** A floating support structure as claimed in any one of the previous claims, wherein the ballast of said ballasting means (2) comprises water.

**10.** A floating support structure as claimed in any one of the previous claims, wherein said intermediate part (2) consists of a solid cylinder, a tube, a torus, or a plurality of modules (9, 10, 11) distributed in a continuous or discontinuous manner over lower part (4).

**11.** A floating support structure as claimed in claim 10, wherein said intermediate part (2) consists of a steel structure (12) and a plurality of modules (11).

**12.** A floating support structure as claimed in any one of the previous claims, wherein said intermediate part (13) is at least partly detachable so as to be removed when the floating support structure is ballasted.

**13.** A floating support structure as claimed in any one of the previous claims, wherein said floating support structure (1) comprises a transition module (5, 14, 15) forming the transition between said intermediate part (2) and said upper part (3).

**14.** A floating support structure as claimed in claim 13, wherein said transition module (5) has a substantially conical or truncated shape.

**15.** A floating support structure as claimed in any one of claims 13 or 14, wherein said transition module (5, 14, 15) is arranged around the upper part.

**16.** A floating support structure as claimed in any one of claims 13 or 14, wherein said transition module (15) is arranged above at least one module (9, 10, 11) forming said intermediate part (2).

**17.** A floating support structure as claimed in any one of the previous claims, wherein said upper part (3) is made of low-density concrete, of steel or of a steel/composite mix.

**18.** A floating support structure as claimed in any one of the previous claims, wherein said upper part (3) comprises several modules (16).

**19.** A wind turbine installation on a stretch of water, comprising a wind turbine and a floating support structure (1) as claimed in any one of the previous claims, said wind turbine being installed on said floating support structure.

Figure 1

Figure 2

Figure 3

Figure 4a                              Figure 4b

Figure 4c                              Figure 4d

3

2

4

**Figure 4e**

**Figure 5a**

**Figure 5b**

6

2

4

7

**Figure 5c**

**Figure 5d**

Figure 6a                                      Figure 6b

Figure 7a

Figure 7b

Figure 7c

Figure 7d

Figure 7e

Figure 8a
Figure 8b

Figure 9a
Figure 9b
Figure 9c

**Figure 10a**

**Figure 10b**

**Figure 10c**

**Figure 10d**

**Figure 11a**

**Figure 11b**

**Figure 11c**

Figure 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2990005
- WO 2013160579 A
- FR 2990477
- WO 2013167820 A
- FR 2999662
- US 2014167421 A
- FR 3005698
- WO 2014184454 A
- WO 0228704 A1